# EUROPEAN PATENT APPLICATION

(11) **EP 1 380 480 A1**
(43) Date of publication of application: **14.01.2004**
(21) Application number: 03015555.0
(22) Date of filing: 10.07.2003
(51) Int. Cl.: B60R 25/02, B60R 25/00

(54) **Electric steering lock**

(30) Priority: 12.07.2002 IT TO20020608
(71) Applicant: TRW ITALIA S.p.A., 25063 Gardone Valtrompia (IT)
(72) Inventor: Torrini, Stefano, 10093 Collegno (IT)
(74) Representative: Bongiovanni, Simone

(57) **Abstract**

An electric steering lock (1) having a metal supporting case (3); an electric motor (9); a catch (11) movable linearly and reversibly; and a transmission (13) interposed between a rotary output member (14) of the electric motor (9) and the catch (11). The supporting case (3) is formed in one piece, and houses and supports the electric motor (9), the catch (11), and the transmission (13).

## Description

The present invention relates to an electric steering lock.

Electric steering locks are known comprising an electric motor; a catch; and a transmission interposed between a rotary output member of the motor and the catch to produce a reversible linear movement of the catch to and from a bush fitted to the steering column, so that the catch engages/releases seats in the bush to engage/release the steering lock.

Such steering locks comprise various sub-units, which are fitted together to form an assembly which is not particularly strong and is rarely compact.

It is an object of the present invention to provide a compact steering lock with an extremely strong structure.

According to the present invention, there is provided an electric steering lock comprising: supporting means; an electric motor; a catch which performs a reversible linear movement; and a transmission interposed between a rotary output member of the electric motor and said catch; characterized in that said supporting means comprise a supporting case formed in one piece, in particular in one piece of metal material, and housing said electric motor, said catch, and said transmission.

A preferred, non-limiting embodiment of the invention will be described by way of example with reference to the accompanying drawings, in which:
Figure 1 shows an exploded view of an electric steering lock in accordance with the teachings of the present invention;
Figure 2 shows a section of the Figure 1 steering lock in a first plane;
Figure 3 shows a section of the Figure 1 steering lock in a second plane parallel to the first;
Figures 4 and 5 show larger-scale views in perspective of a detail of the Figure 1 steering lock;
Figures 5 and 6 show side views of the Figure 4 and 5 detail in two different operating positions.

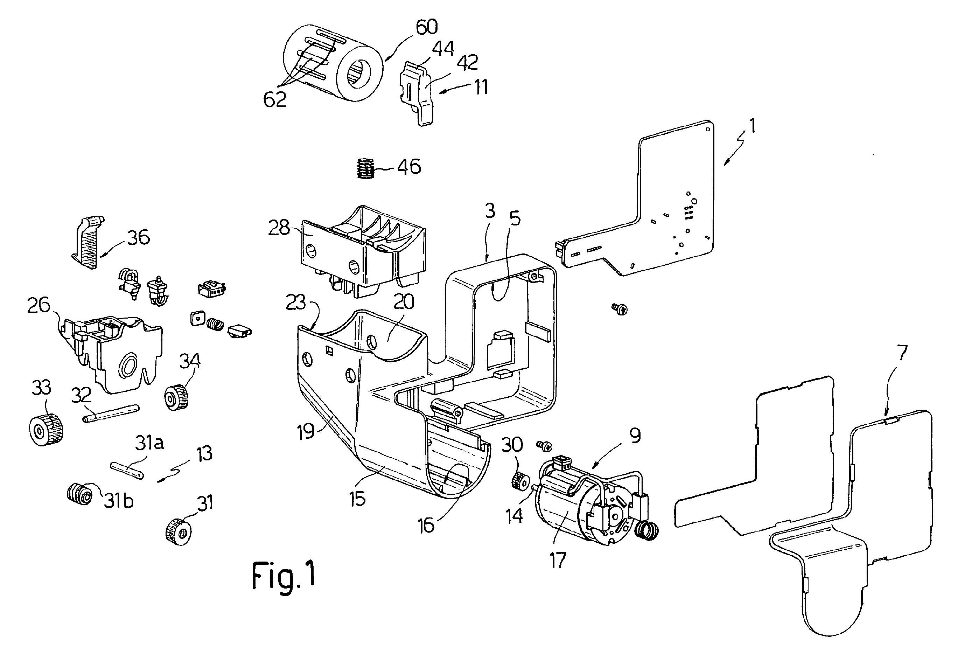

Number 1 in Figure 1 indicates as a whole an electric steering lock.

More specifically, electric steering lock 1 comprises a supporting case 3 formed in one piece of metal material (e.g. an aluminium casting) and having a rear opening 5 fitted with a cover 7 preferably formed in one piece of metal material, and which is permanently deformed to close rear opening 5 in a stable way.

According to the present invention, supporting case 3 houses a direct-current electric motor 9; a catch 11 which performs a reversible linear movement, and which, in an extracted operating position, projects at least partly from case 3; and a transmission 13 interposed between a rotary output member 14 of motor 9 and catch 11.

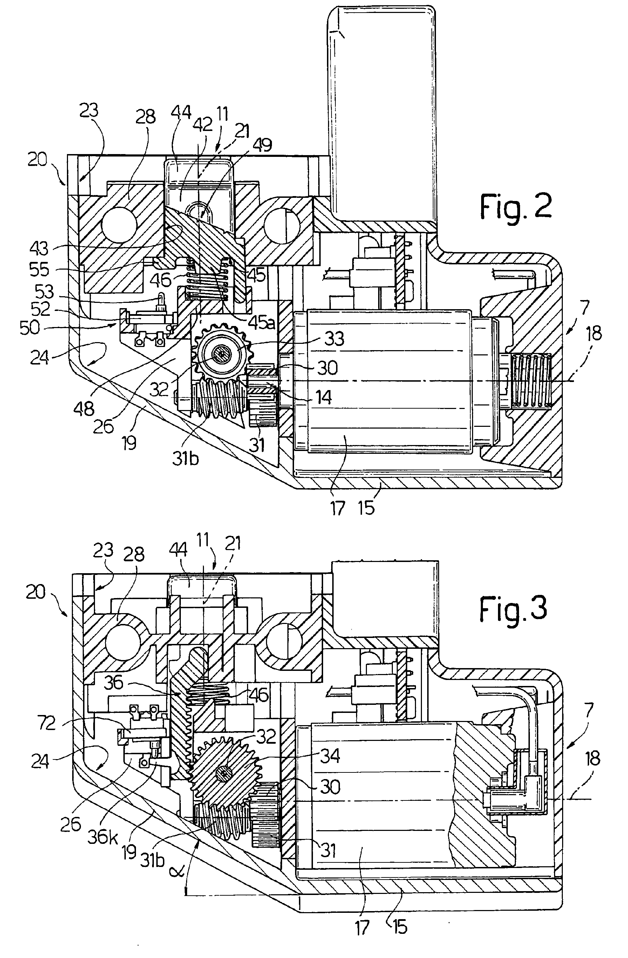

More specifically, supporting case 3 comprises an integral cylindrical wall portion 15 defining a seat 16 for housing the cylindrical body 17 of electric motor 9 positioned coaxially with an axis 18 (Figures 2 and 3) of cylindrical wall portion 15. Cylindrical body 17 of electric motor 9 is set in an axially stable position, by a rear portion of body 17 resting on a truncated-cone-shaped inner appendix (Figure 2) of cover 7 closing opening 5.

Supporting case 3 also comprises a roughly truncated-cone-shaped front wall portion 19 integral with cylindrical wall portion 15 and sloping with respect to axis 18 by an angle (Figure 3) of about 45°.

Truncated-cone-shaped wall portion 19 is also connected to a rectangular-section tubular wall 20 having an axis 21 (Figures 2 and 3) perpendicular to axis 18, and a rectangular end opening 23.

Tubular wall 20 and truncated-cone-shaped wall portion 19 define an inner cavity 24 (Figure 2) adjacent to seat 16 and communicating externally via opening 23.

Inner cavity 24 houses transmission 13, which comprises members fitted to a supporting member 26 insertable inside inner cavity 24 through opening 23.

Steering lock 1 also comprises a cap member 28, which clicks on to rectangular-section tubular wall 20 to close opening 23, and acts as a guide for catch 11.

More specifically, transmission 13 comprises:
- a first gear 30 fitted to rotary output member 14 of electric motor 9 and housed in inner cavity 24;
- a second gear 31 meshing with first gear 30 and fitted to a first end of a first countershaft 31a;
- a worm 31b fitted to a second end of countershaft 31a;
- a second countershaft 32 perpendicular to axis 18 (and therefore to rotary output member 14 of electric motor 9, which is coaxial with axis 18) and fitted to supporting member 26;
- a third gear (or sector gear) 33 fitted to a first end of countershaft 32 and meshing with worm 31b;
- a fourth gear (or sector gear) 34 fitted to a second end of countershaft 32; and
- a rack 36 meshing with fourth gear 34 and movable back and forth along axis 21 perpendicular to axis 18 and to countershaft 32.

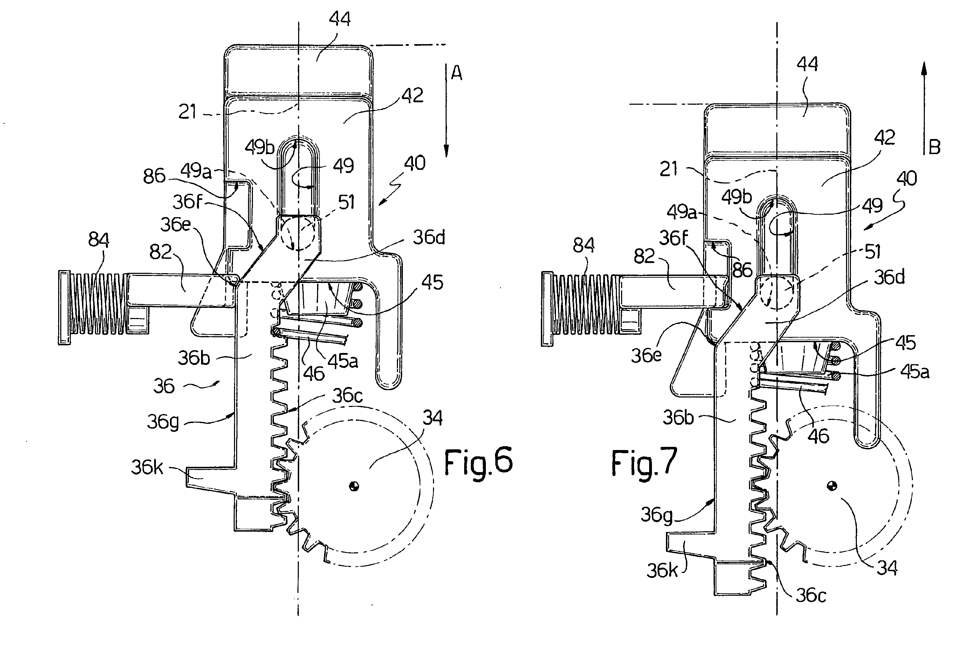

Rack 36 (Figures 6 and 7) comprises an elongated parallelepiped-shaped body 36b having, on a first rectangular lateral wall, teeth 36c defined by a number of equally spaced straight teeth with an isoscelestrapezium-shaped section. Rack 36 also comprises an integral end portion 36d sloping with respect to elongated parallelepiped-shaped body 36b, and defining with it an edge 36e between a flat rectangular wall 36f of integral end portion 36d, and a second flat rectangular wall 36g, opposite the toothed portion, of elongated parallelepiped-shaped body 36b.

End portion 36d is connected to catch 11 by a non-rigid connecting device 40, which, for a first travel direction A of catch 11 along axis 21, connects rack 36 and the catch stably, and, for a second travel direction B of catch 11 along axis 21, disconnects rack 36 and catch 11.

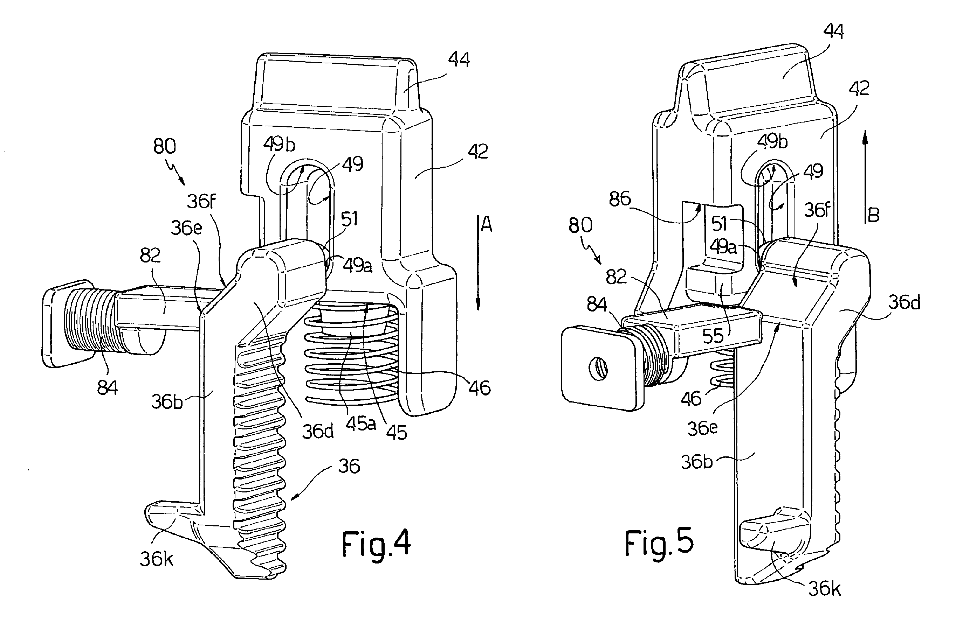

More specifically, catch 11 comprises an elongated, rectangular-section, parallelepiped-shaped main body 42 (Figures 4-6) which engages in sliding manner a rectangular opening 43 (Figure 2) formed in a central portion of cap member 28.

Main body 42 has a first end portion, from which extends integrally a ridge 44 facing outwards of case 3 and having a substantially U-shaped section.

Main body 42 also has a substantially flat second end portion 45 facing inwards of case 3 and housed in cavity 24; and a short truncated-cone-shaped appendix 45a extends integrally from a central portion of end portion 45.

A coil spring 46 has one end fitted to truncated-cone-shaped appendix 45a, is coaxial with axis 21, and is interposed between second end portion 45 of catch 11 and a shoulder 48 (Figure 2) defined by supporting member 26.

Coil spring 46 moves catch 11 into an extracted operating position, in which a considerable portion of main body 42 projects from cap member 28.

Catch 11 also comprises an elongated slot 49, which extends along a rectangular wall of main body 42, is parallel to the axis of main body 42, is of considerably constant width and depth, and has first and second opposite end portions 49a, 49b bounded by curved sides.

The elongated slot houses a cylindrical appendix 51 extending integrally from integral end portion 36d of rack 36.

Consequently, when rack 36 moves in travel direction A, cylindrical appendix 51 is positioned resting on first end portion 49a of slot 49 to stably connect rack 36 and catch 11, which moves inwards of cavity 24 to compress spring 46, and continues moving into a withdrawn operating position (Figure 2) in which ridge 44 of catch 11 is flush with opening 23.

When rack 36 moves in travel direction B, catch 11 is moved upwards by spring 46. If catch 11 is prevented from moving, appendix 51 is still allowed to move along slot 49 towards second end 49b of slot 49.

Catch 11 continues moving into the extracted operating position, in which a considerable portion of the main body projects from cap member 28.

Steering lock 1 also comprises a position detector 50 (Figure 2), which in turn comprises a microswitch 52 fitted to supporting member 26 and having a control member 53 activated by a short appendix 55 extending radially from second end portion 45 of catch 11.

Appendix 55 presses control member 53 to close (or open) microswitch 52 when catch 11 is in the withdrawn position.

The movement of catch 11 into the extracted position detaches appendix 55 from control member 53 to open (or close) microswitch 52.

Full extraction of catch 11 (indicating it is set correctly to the extracted operating position) may be detected by a second microswitch 72 (Figure 3) fitted to supporting member 26, and which is closed (or opened) by a bottom appendix 36k on rack 36, when the rack is positioned so that catch 11 projects from cap member 28.

Catch 11 is also connected to a retaining device 80 (Figures 4 and 5) comprising a parallelepiped-shaped stop member 82, which is pushed by a spring 84 in a direction crosswise to axis 21 towards catch 11, and is inserted inside a seat 86 in main body 42 when catch 11 is in the withdrawn operating position. Insertion of stop member 82 inside seat 86 prevents any movement of the catch along axis 18, and so prevents accidental withdrawal of catch 11 from case 3 (and accidental engagement of the steering lock). Parallelepiped-shaped stop member 82 is withdrawn from seat 86 by the movement of rack 36. That is, the impact of edge 36e against a front edge of parallelepiped-shaped stop member 82 displaces stop member 82, compresses spring 84, and so causes member 82 to withdraw from seat 86.

Electric steering lock 1 acts on a cylindrical bush 60 fitted to the steering column (not shown) and having a number of angularly equally spaced seats 62 on the cylindrical surface of bush 60.

Cylindrical bush 60 is positioned so that its axis is substantially parallel to axis 18, axis 21 is crosswise to the axis of bush 60, and at least one seat 62 faces cap member 28.

In actual use, to engage electric steering lock 1, electric motor 9 is operated in a first rotation direction, so that transmission 13 moves rack 36 along axis 21 in direction B, and catch 11 is moved in direction B by spring 46, and projects from cap member 28 to engage a seat 62. Engagement of seat 62 by catch 11 prevents bush 60 from rotating, thus engaging the steering lock.

To release electric steering lock 1, electric motor 9 is operated in a second rotation direction, so that transmission 13 moves rack 36 along axis 21 in direction A, and catch 11 is moved in direction A by appendix 51 of rack 36 to reengage cap member 28 and release a seat 62. Release of seat 62 by catch 11 enables rotation of bush 60, thus releasing the steering lock.

The following are some of the advantages of the steering lock according to the present invention.

Steering lock 1 is structurally extremely strong, is assembled quickly and easily, and is compact, by virtue of a single case supporting and housing all the component parts.

Steering lock 1 is also compact, and is so shaped as to prevent injury to the driver's legs in the event of a crash. That is, by sloping with respect to cylindrical wall portion 15, truncated-cone-shaped wall portion 19 defines an outline that does not interfere with the envelope defined by the knee surfaces of the driver sliding towards the front of the vehicle in the event of a crash.

Moreover, transmission 13 as described above provides for a good gear ratio, converts rotation of motor 9 to linear motion of rack 36 and catch 11, is compact, and ensures irreversibility, by any external action on catch 11 or rack 36 not being transmitted to motor 9.

As stated, rack 36 is connected non-rigidly to catch 11, so that catch 11 remains in the withdrawn operating position in the event a seat 62 of bush 60 is not oriented in the travel direction of catch 11 along axis 21, and subsequent rotation of the steering column (not shown) positions seat 62 facing catch 11, so that spring 46 pushes catch 11 into seat 62 to engage the steering lock.

## Claims

1. An electric steering lock (1) comprising:
- supporting means (3);
- an electric motor (9);
- a catch (11) which performs a reversible linear movement; and
- a transmission (13) interposed between a rotary output member (14) of the electric motor (9) and said catch (11);
**characterized in that** said supporting means comprise a supporting case (3) formed in one piece, in particular in one piece of metal material, and housing said electric motor (9), said catch (11), and said transmission (13).

2. A steering lock as claimed in Claim 1, wherein said supporting case (3) comprises an opening (5) closed by a cover (7).

3. A steering lock as claimed in Claim 2, wherein said cover (7) closes in a stable way the opening (5) by permanent deformation of the cover (7) itself.

4. A steering lock as claimed in any one of the foregoing Claims, wherein said supporting case (3) comprises an integral cylindrical wall portion (15) defining a seat (16) for housing the cylindrical body (17) of the electric motor (9) positioned coaxially with an axis (18) of said cylindrical wall portion (15).

5. A steering lock as claimed in Claim 4, wherein said supporting case (3) comprises a front wall portion (19) integral with said cylindrical wall portion (15) and forming an angle with said cylindrical wall portion (15).

6. A steering lock as claimed in Claim 5, wherein said front wall portion (19) slopes with respect to said axis (18) by an angle of about 45°.

7. A steering lock as claimed in Claim 5 or 6, wherein said front wall portion (19) is roughly truncated-cone-shaped.

8. A steering lock as claimed in any one of the foregoing Claims, wherein said supporting case (3) defines an inner cavity (24) communicating externally via an opening (23); said inner cavity (24) housing said transmission (13), which comprises members fitted to a supporting member (26) insertable inside the inner cavity (24) via said opening (23).

9. A steering lock as claimed in any one of the foregoing Claims, wherein said supporting case (3) defines an inner cavity (24) communicating externally via an opening (23); said steering lock (1) also comprising a cap member (28) which is fitted to said supporting case (3) to close the opening (23), and which acts as a guide for said catch (11).

10. A steering lock as claimed in any one of the foregoing Claims, wherein said transmission (13) comprises:
- a worm member (31b) activated (30, 31) by the rotary output member (14) of said electric motor (9);
- a countershaft (32) perpendicular to the axis of rotation (18) of said rotary output member (14);
- a first toothed member (33) fitted to a first end of said countershaft (32) and meshing with said worm member (31b);
- a second toothed member (34) fitted to a second end of said countershaft (32); and
- a rack (36), which meshes with said second toothed member (34), and is movable back and forth in a direction (21) perpendicular to said axis of rotation (18) of said rotary output member (14); said rack (36) being connected to said catch (11).

11. A steering lock as claimed in Claim 10, wherein said transmission also comprises:
- a first gear (30) fitted to the rotary output member (14) of the electric motor (9); and
- a second gear (31) meshing with the first gear (30); said worm member (31b) being connected rigidly (31a) to said second gear (31).

12. A steering lock as claimed in any one of the foregoing Claims, and comprising a non-rigid connecting device (40) interposed between said catch (11) and an output member (36) of said transmission (13) movable linearly and reversibly; said non-rigid connecting device (40) stably connecting the output member (36) and the catch (11) for a first withdrawal travel direction A of said catch (11), and disconnecting the output member (36) and the catch (11) for a second extraction travel direction B of the catch (11).

13. A steering lock as claimed in Claim 12, wherein said non-rigid connecting device (40) comprises a slot (49) formed in a wall of said catch; and a body (51) sliding inside said slot and carried by said output member (36).

14. A steering lock as claimed in any one of the foregoing Claims, wherein elastic means (46) are provided for moving said catch (11) into an extracted operating position, in which a considerable portion of the body (42) of the catch projects from said supporting case.

15. A steering lock as claimed in Claim 14, wherein said elastic means (46) comprise a coil spring (46) located between a second end portion (45) of said catch (11) facing inwards of the supporting case, and a shoulder (48) defined in said supporting case (3).

16. A steering lock as claimed in any one of the foregoing Claims, and comprising position detecting means (50) connected to said catch and for determining at least two positions of the catch.

17. A steering lock as claimed in Claim 16, wherein said position detecting means (50) comprise a microswitch (52) switched by a portion (55) of said catch (11).

18. A steering lock as claimed in any one of the foregoing Claims, and comprising detecting means (72) for determining an extracted operating position of the catch (11).

19. A steering lock as claimed in Claim 18, wherein said detecting means (72) comprise a switch (72) carried by said supporting case, and which is activated by an output member (36) of said transmission (13) movable linearly and reversibly.

20. A steering lock as claimed in any one of the foregoing Claims, wherein said catch (11) is connected to a retaining device (80), which is inserted when the catch (11) is in a withdrawn operating position to prevent accidental engagement of said steering lock (1).

21. A steering lock as claimed in Claim 20, wherein said retaining device (80) comprises a stop member (82) movable in a direction crosswise to the travel direction (21) of the catch (11), and which is inserted inside a seat (86) on the catch, when the catch (11) is in said withdrawn operating position.

22. A steering lock as claimed in Claim 21, wherein the movement of an output member (36) of said transmission (13) expels said stop member (82) from said seat (86).
